# EUROPEAN PATENT APPLICATION

(11) **EP 4 600 821 A1**
(43) Date of publication of application: **13.08.2025**
(21) Application number: 24156644.7
(22) Date of filing: 08.02.2024
(51) Int. Cl.: G06F 9/50, G06F 9/54, G06Q 10/06, G06Q 20/38

(54) **METHOD AND SYSTEM FOR CONTROLLING OPERATION OF AN EXECUTION OF A PROCESS IN A CLOUD COMPUTING ENVIRONMENT**

(71) Applicant: Barclays Execution Services Limited, London E14 5HP (GB)
(72) Inventor: JENKINSON, Mat, London, E14 5HP (GB); PANIGRAHI, Jeeban, London, E14 5HP (GB); HOLT, Dickon, deceased (GB)
(74) Representative: Carpmaels & Ransford LLP

(57) **Abstract**

A computer-implemented method for controlling operation of an execution of a process in a cloud computing environment is provided. The process pertains to a third-party account, and the cloud computing environment comprises a processing engine having an account operation domain. The method comprises receiving a request from an execution domain within the processing engine for a control prompt. The control prompt is for processing by the execution domain to control operation of the execution of the process. The method further comprises querying one or more control units for one or more control parameters related to the process. The one or more control units are located outside of the processing engine and are associated with the process. The method further comprises aggregating the one or more control parameters from the one or more control units. The method further comprises storing the one or more aggregated control parameters, data associated with the process, and data associated with the third-party account within the account operation domain. The method further comprises transmitting a control prompt to the execution domain for the execution domain to process to control operation of the execution of the process according to the aggregated control parameters.

## Description

### Technical Field

This disclosure relates to a method, domain and cloud computing environment for controlling operation of an execution of a process in a cloud computing environment.

### Background

In contemporary digital environments, data has become ubiquitous, with a notable surge in the prevalence of protected data. Defined by its sensitive cognitive content and requirement for rigorous security measures, the prominence of protected data is steadily increasing. Consequently, there has been a corresponding escalation in the demand for systems specialised in processing protected data.

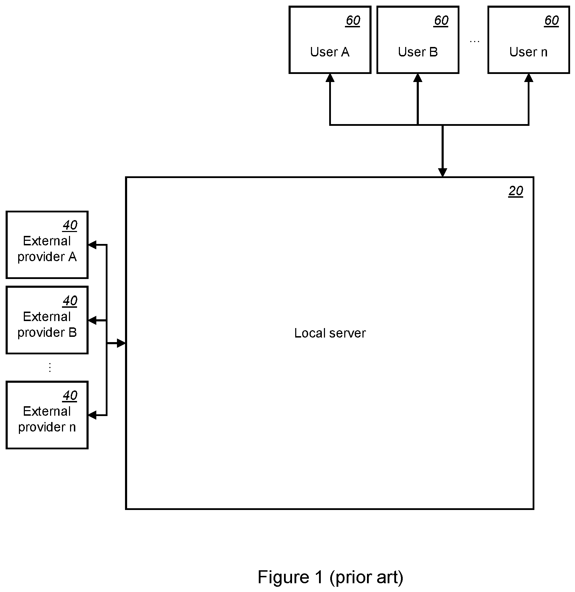

Traditionally, the processing of protected data has been centralised around local servers, as depicted in Figure 1. A local server serves as the focal point responsible for executing protected data processing tasks. These local servers are typically situated on-premises or within a private network environment, physically hosting a myriad of applications specialised in processing various aspects of protected data. In practical scenarios, these applications cater to diverse purposes, often corresponding to distinct products or services. For instance, in the context of consumer banking, one application may handle debit card transactions, while another may focus on credit card transactions.

Despite their historical prevalence, local servers are increasingly facing challenges for protected data processing. Such challenges include scalability constraints, overhead associated with maintenance, geographic limitations, data protection compliance, security vulnerabilities, computer resource redundancy, and latency issues. In light of these challenges and the ever-increasing complexity of the data processing landscape, a need has emerged for systems for processing protected data that transcend the limitations of local servers.

One of the problems presented by such challenges, in particular, those challenges associated with the limited communication capabilities of systems centralised around local servers, relates to determining how to control operation of the execution of given processes. Specifically, processes pertaining to third-party accounts, for which various control units in a broader digital environment of a first party may have a controlling interest. For example, a third-party account may relate to a user's digital identity, and a control unit may relate to one of a number of security and/or safeguarding functions that seek to control operation of an execution of a process pertaining to the user's digital identity. In another example, in the context of consumer banking, a third-party account may relate to a banking service end user account, and a control unit may relate to one of a number of risk management functions of a bank (the first party) that seeks to control operation of an execution of a process pertaining to the end user account. Traditionally, controlling operation of the execution of processes pertaining to third-party accounts has been managed by processing platforms based, for example, on local servers owned and maintained by a first party. Such processing platforms are configured to control operation of the execution of a process pertaining to a third-party account by reconciling a set of account-oriented markers and/or flags that are maintained on the processing platform by various control units (of the first party) that are interested in exerting influence over the particular third-party account. Over time, this account-centric approach to process execution logic, which over-relies on, and encourages a build-up of, markers and/or flags on the processing platform can make it unclear which markers and/or flags should be influencing which processes. As a result, setting or un-setting markers and/or flags can have unexpected and undesirable consequences. Additionally, a build-up of markers and/or flags can result in handing over process execution logic to the processing platform, e.g., to determine when to veto a given process, when, instead, the process execution logic should be performed by the systems and units responsible for executing and controlling the process. Taking advantage of the extensive capabilities of cloud computing environments (particularly, the event-driven processing basis), it is an objective of the present invention to overcome challenges associated with existing data processing systems by providing methods and systems that minimise the need for maintaining markers and/or flags on processing platforms to control operation of an execution of a process.

### Summary

The present invention is defined by the independent claims, with further optional features being defined by the dependent claims.

In a first aspect of the invention, there is provided a computer-implemented method for controlling operation of an execution of a process in a cloud computing environment, the process pertaining to a third-party account, the cloud computing environment comprising a processing engine having an account operation domain, wherein the method is performed by the account operation domain and comprises:
a) receiving a request from an execution domain within the processing engine for a control prompt, wherein the control prompt is for processing by the execution domain to control operation of the execution of the process;
b) querying one or more control units for one or more control parameters related to the process, wherein the one or more control units are located outside of the processing engine and are associated with the process;
c) aggregating the one or more control parameters from the one or more control units;
d) storing the one or more aggregated control parameters, data associated with the process, and data associated with the third-party account within the account operation domain; and
e) transmitting a control prompt to the execution domain for the execution domain to process to control operation of the execution of the process according to the aggregated control parameters.

By implementing an account operation domain within a processing engine of a cloud computing environment, the method provides a dynamic and adaptable means for answering the question of how and/or whether a processing engine should execute a given process pertaining to a given third-party account. At a high level, the account operation domain, which is expressly responsible for determining how (not deciding how) the operation of an execution of a process should be controlled, puts the onus back on those components of a digital environment responsible for deciding how to control and execute a given process. In the present context, the components responsible for deciding how to control and execute a given process are the control units and the execution domain, respectively. By a maintaining an event-centric, or in other words, process-centric, approach to determining how to control operation of an execution of a process, the method eliminates the danger of the account operation domain (and more generally, the processing engine) becoming a) a repository for account-oriented markers and/or flags, and b) responsible for process control logic. This is because the account operation domain acts as a central component of an end-to-end cloud-based framework for providing a control prompt (based on control parameters from control units) to an execution domain to for it to execute a process, accordingly. As the method is process-centric and not account-centric (as is the case with traditional methods), and as the account operation domain itself is not responsible for generating control parameters, existing challenges with being able to interpret a store of markers and/or flags maintained on a processing platform against a given third-party account are, therefore, overcome. Moreover, the process-specific (and, therefore, time-specific) aggregating function of the account operation domain allows the method to overcome challenges with trying to reconcile conflicting markers and/or flags that have been set by different control units and that may have been set at different times. Additionally, by storing data collected and produced during the method within the account operation domain, the method provides a log of data from which useful insights can be obtained, e.g., for auditing purposes.

In some embodiments, step b) comprises querying a plurality of control units of the one or more control units in series.

In some embodiments, the series order in which to query the plurality of control units is optimised based on historical data relating to the plurality of control units.

In some embodiments, the historical data comprises estimated response times for each of the of the plurality of control units.

In some embodiments, querying the plurality of control units in series terminates when a control parameter obtained in response from a given one of the plurality of control units comprises a veto against the process.

Various patterns of communication between the account operation domain and the one or more control units, i.e., via querying, are envisaged. One such pattern involves querying a plurality of control units of the one or more control units in series. Such a pattern of communication may be preferable when one or both of available computational resource and time-sensitivity for performing the method are low. Such a pattern may also be useful in instances where minimising use of available computational resource is a priority and where the querying terminates upon a first instance of a control parameter having a predetermined value, e.g., a veto against the process, being obtained. To support minimising the use of available computational resource, the series order in which to query the plurality of control units may be optimised based on historical data relating to the control units, e.g., estimated response times. By determining a series order on the basis of estimated response times and terminating the method when a control parameter having a predetermined value is first returned, use of computational resource can be minimised.

In some embodiments, step b) comprises querying a plurality of control units of the one or more control units in parallel.

An alternative to querying a plurality of control units in series is querying the plurality of control units in parallel. Such a pattern of communication may be preferable when one or both of available computational resource and time-sensitivity for performing the method are high. By querying the plurality of control units in parallel, the method may be performed quicker than when compared to querying the plurality of control units in series. This may be important in instances where a determination of how to control operation of an execution of a given process is required urgently. Relative to traditional digital environments, which may be based on a local server, the cloud computing environment can provide dynamic access to additional computational resource to meet processing demands and, as such, parallel computing can provide a viable and accessible pattern of communication between the account operation domain and a plurality of control units.

In some embodiments, the request comprises an indication of the one or more control units to be queried for control parameters related to the process.

In some embodiments, step b) comprises determining for each of the one or more control units whether the given control unit should be queried for a control parameter related to the process.

In some embodiments, if it is determined that the given control unit should be queried for a control parameter related to the process, obtaining the control parameter from the given control unit.

As part of the process of querying one or more control units, the account operation domain can perform an initial check on whether a given control unit of the one or more control units should, for a particular process pertaining to a third-party account, be queried for a control parameter related to the process. If it is determined that a given control unit need not be queried, e.g., because it has no concern with controlling the given process, then a communication link between the account operation domain and the given control unit need not be established during the method. The account operation domain performing this initial check, therefore, can prevent using computational resources and causing delays unnecessarily, making the method more economical and efficient. Data relating to which of the one or more control units should be queried for control parameters related to a given process may be included as part of the request received from the execution domain. This is because the execution domain is responsible for performing the process execution logic and understands the variables that are relevant to the process being considered for execution. The presence of this data in the request from the execution domain also contributes to limiting the amount of process control and execution logic that needs to be performed by the account operation domain. Alternatively, data relating to which of the one or more control units should be queried for control parameters related to a given process may be known to the account operation domain based on historical data available within the account operation domain and/or elsewhere in the cloud computing environment. This alternative approach may be particularly advantageous when the execution domain from which the request is received is not mature and lacks functions and/or lacks access to processing logic not yet available within its domain. In such instances, the account operation domain may rely on its database and/or relevant data available elsewhere in the cloud computing environment to compensate for the shortcomings of the immature execution domain. Once it is established that a given control unit should be queried for control parameters, a communication link between the account operation domain and the given control unit can be established and one or more unit-specific patterns of communication can be employed by the account operation domain, as disclosed herein, to obtain a control parameter from the given control unit.

In some embodiments, step b) comprises transmitting data associated with the third-party account and data associated with the process to the one or more control units for processing to obtain the one or more control parameters from the one or more control units in response.

The querying of control units by the account operation domain is process- and account-specific. A query sent from the account operation domain to a control unit may include account and process data. Alternatively, the account and/or process data may be obtained by a control unit from an alternative source within or outside of the cloud computing environment. The cloud computing environment allows for adaptively establishing communication paths within the cloud computing environment and between the cloud computing environment and an external (e.g., local) environment to support both of these options.

In some embodiments, step b) comprises querying a processing module of a control unit of the one or more control units for one or more real-time control parameters related to the process.

In addition to being able to establish communication patterns with a set of control units, i.e., series or parallel communication patterns, the account operation domain may also establish a unit-specific communication pattern for a given control unit. One such unit-specific communication pattern for a given control unit relates to querying a processing module of a control unit of the one or more control units for one or more real-time control parameters related to the process. Such a unit-specific communication pattern may be used in instances where a given control unit has the capacity and availability to be queried in real-time which, although being computationally expensive and coming at the expense of higher latency, has the benefit of obtaining accurate, i.e., up to date, control parameters. Such control parameters reflect the latest position of the control unit in relation to the given process for the given third-party account, which may be particularly important in instances where the view of the control unit as regards the control parameters is subject to frequent change and where the effect of the one or more control parameters has significant consequences. In other words, this unit-specific communication pattern is suitable when the control parameters represent highly volatile data that absolutely has to be correct.

In some embodiments, step b) comprises replicating from a database of a control unit of the one or more control units one or more previously generated and stored control parameters related to the process.

Another unit-specific communication pattern for a given control unit relates to replicating from a database of a control unit of the one or more control units one or more previously generated and stored control parameters related to the process. Such a unit-specific communication pattern may be used in instances where a given control unit does not have the capacity and availability to be queried in real-time, or instances where a given control unit does have the capacity and availability to be queried in real-time, but the method requires high-availability of data and low latency. This unit-specific communication pattern may not reflect the latest position of a control unit in relation to a given process for a given third-party account, but the position may not be frequently subject to change and may be required immediately by the method due to the specific time sensitivities of making a decision on executing a specific process. As a direct service call to a control unit is not required for this unit-specific communication pattern, use of computational resource is minimised, and data availability is high.

Although the method refers to a single request from an execution domain, encompassed within the scope of the method are embodiments that involve a hybrid of unit-specific communication patterns. For example, for a given request from a given execution domain, the account operation domain may communicate with a processing module of a first control unit via a real-time call and may communicate with a database of a second control unit to replicate one or more previously generated and stored control parameters, simultaneously. In another example, the account operation domain may be in communication with a given control unit through both of the above-described unit-specific communication patterns, simultaneously, e.g., for two separate requests from a given execution domain, or for a first request from a first execution domain and a second request from a second execution domain.

In some embodiments, the one or more control parameters comprise constraints for controlling operation of the execution of the process.

In some embodiments, step c) comprises determining whether the one or more aggregated control parameters comprise one or more vetoes against the process.

In some embodiments, the control prompt comprises an approval for or a veto against the execution domain executing the process.

In some embodiments, step c) comprises binary classifying the one or more aggregated control parameters before applying a Boolean AND function on the classified aggregated control parameters.

In some embodiments, if an output of the Boolean AND function is low, the control prompt comprises a veto against the execution domain executing the process, and if an output of the Boolean AND function is high, the control prompt comprises an approval for the execution domain to execute the process.

In some embodiments, the execution domain is responsible for executing the process.

As discussed, one or more control units may be concerned with having operational control over the execution of a given process pertaining to a given third-party account. As part of the method, the account operation domain obtains control parameters from one or more control units, where the control parameters obtained from the one or more control units reflect the various positions of the one or more control units in relation to the process and account in question. These control parameters may provide constraints for controlling operation of the execution of the process, i.e., constraints for the execution domain to consider when executing the process. In an example, these constraints, as represented by the control parameters, are a veto against, or an approval for, the process being executed. The control parameters may be represented in a binary form, e.g., with a veto and an approval represented as a 1 and 0, a YES and NO, a high and low, respectively. An embodiment of the method is performed on the premise of a veto model, in which only one veto, 0, NO, or low is required in a set of aggregated control parameters to determine to prevent the execution of the process. Upon determining the presence of one or more vetoes, 0s, NOs, or lows in the aggregated control parameters, the method may transmit a control prompt to the execution domain that includes a veto against the execution domain executing the process. In the absence of any one veto, 0, NO, or low in the aggregated control parameters, the transmitted control prompt may include an approval for the execution domain to execute the process. Using the aggregated and binary-classified control parameters as inputs, a Boolean AND function can be used to determine whether the transmitted control prompt should include a veto or approval. Ultimately, however, it is the responsibility of the execution domain to process the control prompt received from the account operation domain and execute the process, accordingly. The process control logic and the process execution logic, therefore, belong to those components of the digital environment responsible for controlling operation of the execution of the process, i.e., the control units and the execution domain, respectively. Using a veto-based model to control operation of an execution of a process means that a single veto control parameter returned by any one of the control units queried is enough to determine that the process should be vetoed. A veto-based model may be preferable to avoid problems relating to precedence, i.e., where the value of a control parameter returned by a given control unit is judged relative to those of other control units. In a veto-based model, each control unit may have equal value in determining whether or not a process is executed, and the account operation domain is relieved of the responsibility of dynamically determining how to reconcile conflicting control parameters that are returned by the control units.

In some embodiments, step d) comprises storing the one or more aggregated control parameters, data associated with the process, and data associated with the third-party account within a database of the account operation domain.

The data used as input to, and generated by, the method, may be stored by the account operation domain to improve the trackability and auditability of third-party accounts engaging with processes associated with a party maintaining the cloud computing environment. Every process pertaining to a third-party account that is executed and that requires the input of the one or more control units to execute is logged on the account operation domain, along with the control parameters provided by the one or more control units in relation to the given process. Therefore, in the event that a particular decision on whether to execute a process is being explored, a user of the cloud computing environment, e.g., an auditor, may refer to the data retained by the account operation domain for the given process pertaining to a given third-party account. As the data is logged by request, it is easier to determine the specific parameters relating to the request when compared to traditional systems that include a build-up of markers and/or flags on a processing platform, where the markers and/or flags are account-centric and not process-/request-centric.

In some embodiments, the process defines at least a portion of an event-driven application hosted on the cloud computing environment.

In some embodiments, the request is triggered by a communication from an end user application on an end user device, wherein the end user application interfaces a user with the third-party account.

Cloud computing environments facilitate the use of event-driven applications, where data is processed as events that can, in some instances, trigger a specific action or process. As such, a cloud computing environment can provide a responsive and real-time or near-real-time approach to processing incoming requests. In the present case, the request from an execution domain within the processing engine for a control prompt may be triggered by a communication from an end user application on an end user device. This communication may be received by the cloud computing environment, e.g., via an API gateway, and treated as an event, which, in part, initiates the methods disclosed herein. The subsequent application, which is event-driven, may be characterised as an end-to-end processing path that traverses the cloud computing environment until an application is performed responsive to the initial event.

In some embodiments, the processing engine and the control units are maintained by a first party, wherein the process pertaining to the third-party account relates to accessing services provided by the first party.

In some embodiments, the cloud computing environment is hosted by a second party.

In some embodiments, the one or more control units comprises one or more control units based on the cloud computing environment and/or one or more control units based on a local server, wherein the local server is local to a first party that maintains the processing engine and the control units.

Cloud computing environments are provided by cloud computing providers/platforms for entities to dynamically configure digital environments, thereon. In the present case, the processing engine and control units are maintained by a first party and hosted on a cloud computing environment provided by a second party. By configuring the cloud computing environment to dynamically facilitate the methods herein disclosed, a first party may provide a third-party access to services offered by the first party via an account, and may control operation of the execution of processes pertaining to the (third-party) account, responsively. The first party may have or require part of its digital environment to be based locally to the first party, e.g., one or more control units. The method, by virtue of the cloud computing environment facilitating dynamic access to a party's local computing resource, supports such hybrid environments.

In a second aspect of the invention, there is provided an account operation domain within a processing engine of a cloud computing environment configured to perform the methods herein disclosed, comprising:
a) one or more processing modules for communicating with, and processing data from, the execution domain and the one or more control units; and
b) one or more databases for storing the one or more aggregated control parameters, data associated with the process, and data associated with the third-party account.

In a third aspect of the invention, there is provided a cloud computing environment comprising the account operation domain.

### Brief Description of the Drawings

Embodiments of the invention are described below, by way of example, with reference to the following drawings, in which:
Figure 1 depicts a conventional system for processing protected data.
Figure 2 illustrates a cloud computing environment-based system for processing protected data in which the methods of the invention may be implemented.
Figure 3A and Figure 3B show components of a cloud computing environment for implementing the invention.
Figure 4A and Figure 4B show an example user device and example external provider system, respectively, that may be used in conjunction with the cloud computing environment-based system of the invention.
Figure 5 shows an example architecture of a cloud computing environment for implementing the invention.
Figure 6A, Figure 6B and Figure 6C show example integration patterns of a cloud computing environment for implementing the invention.
Figure 7 shows a flow diagram of a method for controlling operation of an execution of a process in a cloud computing environment according to an embodiment of the invention.
Figure 8 illustrates a cloud computing environment-based system for controlling operation of an execution of a process in a cloud computing environment according to an embodiment of the invention.
Figure 9 illustrates the interactions between an account operation domain, an execution domain, and one or more control units according to an embodiment of the invention.
Figure 10 shows a first protocol sequence diagram of a computer-implemented method for controlling operation of an execution of a process in a cloud computing environment according to an embodiment of the invention.
Figure 11 shows a second protocol sequence diagram of a computer-implemented method for controlling operation of an execution of a process in a cloud computing environment according to an embodiment of the invention.

### Detailed Description

The present disclosure pertains to systems for processing protected data and methods related to processing protected data. Protected data, as referred to herein, is data that requires protecting due to its cognitive content. This means that protected data typically requires additional security provisions to prevent unauthorised access. Moreover, the storage and processing of protected data is often restricted. In some instances, the restriction is caused by local legislation, for example General Data Protection Regulation (GDPR) in the European Union, and the Data Protection Act 2018 in the United Kingdom. Protected data may include personal data, i.e., information relating to an identified or identifiable natural person. For example, secure data may include a name, an identification number, location data, an online identifier or one or more factors specific to the physical, physiological, genetic, mental, economic, cultural or social identity of a natural person. Protected data may also include financial data as an alternative or in addition.

Figure 1 illustrates a conventional system for processing protected data. As shown in Figure 1, such systems are centralised around a local server 20 that is responsible for performing the processing. The local server 20 is communicatively coupled to a plurality of user devices 60 (i.e. User A, User B... User n), from which processing requests may be received and to which processing outputs may be sent. Typically, a processing request relates to protected data of the user of the user device 60 that sends the request. The local server 20 is also communicatively coupled to a plurality of external provider systems 40 (i.e. External provider A, External provider B... External provider n), as some processes require input from an external provider to be performed. The communicative coupling is established via at least one communication network such as the Internet, a local area network (LAN), a wide area network (WAN), a cellular network (e.g. such as 3G, 4G LTE and 5G), and the like.

Local server 20 is a physical server or group of servers that are located on-premises or within a private network. Local server 20 stores a plurality of applications for processing protected data, each of the applications having a different purpose or underlying product to which it relates. For example, in a consumer banking context, one application may relate to debit card transactions while another application relates to credit card transactions.

The applications stored by local server 20 are typically batch-driven applications. This type of application is designed to process data in batches, where a set of data is collected, processed, and output before the next set of data is collected and processed. In this context, a 'batch' refers to a collection or grouping of data, tasks, or operations that are processed together as a single unit. Batch processing involves the execution of multiple tasks or data operations in a sequential or parallel manner, typically on a scheduled basis or when a predefined batch size is reached. Batches are often used to efficiently manage and process large volumes of data or perform complex operations that do not require real-time or immediate processing. For this reason, batch-driven applications may be thought of as synchronous applications. This is in contrast to event-driven applications which are asynchronous applications as the processing occurs once the data is received.

The local server 20 is configured to generate and receive messages in a relational data format. Relational data formats are structured and organised in tables, with rows representing records and columns representing attributes. This type of data format is commonly used in traditional database management systems and can be easily queried and manipulated using Structured Query Language (SQL). The use of a relational data format for message generation and reception at the local server 20 allows for compatibility with legacy systems and applications that rely on this type of data format.

### The Cloud Computing Environment

In contrast to conventional protected data processing systems such as the one depicted in Figure 1 where processing is performed primarily on the local server 20, the systems of the invention use a cloud computing environment 10 for protected data processing. Cloud computing environment 10 provides improved scalability, flexibility, reliability, and disaster recovery capabilities over local servers. This is because the infrastructure for cloud computing environment 10 is typically provided by dedicated cloud providers such as Amazon Web Services, Google Cloud or Microsoft Azure, that handle updates and maintenance of the infrastructure.

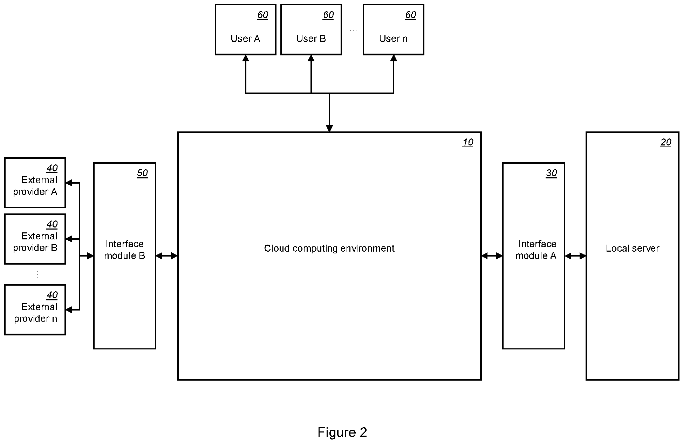

Figure 2 depicts an example system having a cloud computing environment 10 for processing protected data in which the methods of the invention may be implemented. As shown in Figure 2, the local server 20 is still present in this system. However, instead of being communicatively coupled to the plurality of user devices 60 and the plurality of external provider systems 40, the local server 20 is communicatively coupled to the cloud computing environment 10, and it is the cloud computing environment 10 which is communicatively coupled to the plurality of user devices 60 and the plurality of external provider systems 40. The communicative coupling is established via at least one communication network such as the Internet, a local area network (LAN), a wide area network (WAN), a cellular network (e.g. such as 3G, 4G LTE and 5G), and the like. Preferably, the at least one communication network utilises encryption (e.g., Secure Sockets Layer) to secure protected data being transferred to and from the cloud computing environment 10.

While the plurality of user devices 60 are able to natively couple to the cloud computing environment 10, for example via a dedicated application installed on the user device 60, local server 20 and external provider systems 60 typically contain legacy infrastructure and applications, and for this reason cannot natively be coupled to the cloud computing environment 10. This is because, unlike local server 20 and external provider systems 60 which use batch-driven applications, cloud computing environment 10 uses event-driven applications, where data is processed as events.

In the context of event-driven applications, an 'event' refers to a discrete and significant occurrence or notification within the cloud computing environment 10 that triggers a specific action or process. Events are used to signal that a particular condition or change has occurred and should be processed or responded to. For this reason, event-driven applications are designed to detect, capture, and respond to these events in real-time or near-real-time, allowing for responsive and dynamic behaviour within event-driven applications. Events can be generated by various sources, such as user interactions via user device 60, system events, or external sources such as external provider system 40 and local server 20, and they serve as the catalyst for initiating specific actions, processing logic, or workflows within the cloud computing environment 10.

Accordingly, interface modules are provided in the system to couple the local server 20 and the external provider systems 60 with the cloud computing environment 10. Specifically, Figure 2 shows a first interface module (interface module A) 30 that couples the local server 20 to the cloud computing environment 10, and a second interface module (interface module B) 50 that couples the external provider systems 60 to the cloud computing environment 10. Interface module A 30 and interface module B 50 may be outside and separate from the cloud computing environment. However, preferably, the cloud computing environment 10 contains interface module A 30 and interface module B 50. When interface module A 30 and interface module B 50 are provided in the cloud computing environment 10, these interface modules provide communicative coupling to the plurality of user devices 60 and the plurality of external provider systems 40, respectively.

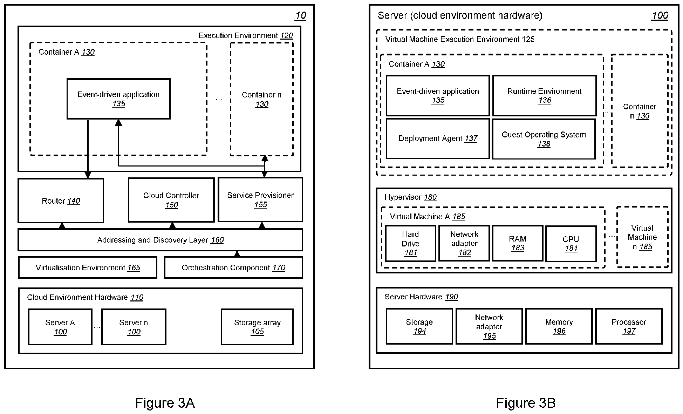

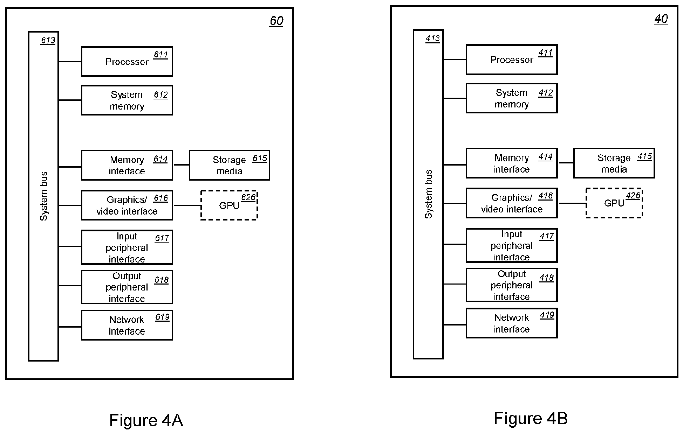

Before providing further details about cloud computing environment 10, interface module A 30, and interface module B 50, the components of cloud computing environment 10, as typically provided by a cloud provider, are discussed with respect to Figure 3A and Figure 3B. Additionally, an example user device 60 and example external provider system are discussed with respect to Figure 4A and Figure 4B.

As shown in Figure 3A, cloud computing environment 10 hosts one or more event-driven applications 135, which are executed in the cloud computing environment 10 for processing protected data that take the form of events. The event-driven application 135 may include executable and/or source code, depending on the implementation language. In this way, the computing resources required for processing protected data are moved from the local server 20, where the processing is performed in conventional systems, to cloud computing environment 10.

As seen in Figure 3A, cloud computing environment 10 comprises cloud computing environment hardware 110 that can be invoked to instantiate data processing, data storage, or other computer resources using cloud computing hardware 110 for a limited or defined duration. Cloud computing environment hardware 110 may comprise one or more physical servers 100, and a storage array network 105, as well as other suitable hardware. Cloud computing environment hardware 110 may be configured to provide a virtualisation environment 165 that supports the execution of a plurality of virtual machines 185 across the one or more physical servers 100. As described in relation to Figure 3B, the plurality of virtual machines 185 provide various services and functions for cloud computing environment 10.

Virtualisation environment 165 of Figure 3A includes orchestration component 170 that monitors the cloud computing environment hardware 110 resource consumption levels and the requirements of cloud computing environment 10 (e.g., by monitoring communications routed through addressing and discovery layer 160), and provides additional cloud computing environment hardware 110 to cloud computing environment 10 as needed. For example, if cloud computing environment 10 requires additional virtual machines 185 to host a further event-driven application 135, orchestration component 170 can initiate and manage the instantiation of the virtual machines 310 on the one or more servers 100 to support such needs. In one example implementation, virtualisation environment 165 may be implemented by running Amazon Elastic Compute Cloud (Amazon EC2) on servers 100.

Cloud computing environment 10 supports an execution environment 125 that comprises a plurality of virtual machines 185 (or plurality of containers 130) instantiated to host the one or more event-driven applications 135.

Event-driven applications 135 can access internal services provided by cloud computing environment 10 as well as external services from the plurality of external providers 40 and from the local server 20. A service provisioner 155 may serve as a communications intermediary between these available services (e.g., internal services and external services) and other components of cloud computing environment 10 (e.g., cloud controller 150, router 140, containers 130), utilising the methods discussed elsewhere herein. Addressing and discovery layer 160 provides a common interface through which components of cloud computing environment 10, such as service provisioner 155, cloud controller 150, router 140 and containers 130 in the execution environment 125 can communicate.

Cloud controller 150 is configured to orchestrate the deployment process for the one or more event-driven applications 135 in cloud computing environment 10. Typically, once cloud controller 150 successfully orchestrates the event-driven application 135 in a container, e.g. container A 130, the event-driven application 135 may be interacted with. For example, a user device 60 may interact with the event-driven application 135 through a web browser or any other appropriate user application residing on user device 60. Router 140 receives the access requests (e.g., a uniform resource locator or URL) and routes the request to container 130 which hosts the event-driven application.

It should be recognised that the embodiment of Figure 3A is merely exemplary and that alternative cloud computing environment architectures may be implemented consistent with the teachings herein.

Figure 3B is a schematic of an exemplary server 100 for implementing the cloud computing environment 10 of the invention. In particular, Figure 3B depicts server 100 comprising server hardware 190 and virtual machine execution environment 125 having containers 130 with event-driven applications 135. The server hardware 190 may include local storage 194, such as a hard drive, network adapter 195, system memory 196, processor 197 and other I/O devices such as, for example, a mouse and keyboard (not shown).

A virtualisation software layer, also referred to as hypervisor 180, is installed on top of server hardware 190. Hypervisor 180 supports virtual machine execution environment 185 within which containers 130 may be concurrently instantiated and executed. In particular, each container 130 one or more event-driven applications 135, deployment agent 137, runtime environment 136 and guest operating system 138 packaged into a single object. This enables container 130 to execute event-driven applications 135 in a manner which is isolated from the physical hardware (e.g. server hardware 190, cloud computing environment hardware 110), allowing for consistent deployment regardless of the underlying physical hardware.

As shown in Figure 3B, virtual machine execution environment 125 of server 100 supports a plurality of containers 130. Docker is an example of a virtual machine execution environment 125 which supports containers 130. For each container 130, hypervisor 180 manages a corresponding virtual machine 185 that includes emulated hardware such as virtual hard drive 181, virtual network adaptor 182, virtual RAM 183, and virtual CPU 184.

It should be recognised that the various layers and modules described with reference to Figure 3B are merely exemplary, and that other layers and modules may be used with the same functionality without departing from the scope of the invention. It should further be recognised that other virtualised computer architectures may be used, such as hosted virtual machines.

Turning to Figure 4A, an example user device 60 for communicating with the cloud computing environment 10 is shown. User device 60 may be embodied as any type of computer, including a server, a desktop computer, a laptop, a tablet, a mobile device, or the like. Components of user device 60 include, but are not limited to, a processor 611, such as a central processing unit (CPU), system memory 612, and system bus 613. System bus 613 provides communicative coupling for various components of user device 60, including system memory 612 and processor 611. Example system bus architectures include parallel buses, such as Peripheral Component Interconnect (PCI) and Integrated Drive Electronics (IDE), and serial buses, such as PCI Express (PCIe) and Serial ATA (SATA).

System memory 612 is formed of volatile and/or non-volatile memory such as read only memory (ROM) and random-access memory (RAM). ROM is typically used to store a basic input/output system (BIOS), which contains routines that boots the operating system and sets up the components of user device 60, for example at start-up. RAM is typically used to temporarily store data and/or program modules that the processor 611 is operating on.

User device 60 includes other forms of memory, including (computer readable) storage media 615, which is communicatively coupled to the processor 611 through a memory interface 614 and the system bus 613. Storage media 615 may be or may include volatile and/or non-volatile media. Storage media 615 may be or may include removable or non-removable storage media. Examples storage media 615 technologies include: semiconductor memory, such as RAM, flash memory, solid-state drives (SSD); magnetic storage media, such as magnetic disks; and optical storage, such hard disk drives (HDD) and CD, CD-ROM, DVD and BD-ROM. Data stored in storage medium 615 may be stored according to known methods of storing information such as program modules, data structures, or other data, the form of which is discussed further herein.

Various program modules are stored on the system memory 612 and/or storage media 615, including an operating system and one or more user applications. Such user applications may cause the user device 60 to interact with cloud computing environment 10. For instance, the user application may cause an event-driven application 135 to begin processing protected data on the cloud computing environment 10.

User device 60 is communicatively coupled to the cloud computing environment 10 via the least one communication network, such as the Internet. Other communication networks may be used including a local area network (LAN) and/or a wide area network (WAN). Further communication networks may be present in various types of user device 60, such as mobile devices and tablets, to cellular networks, such as 3G, 4G LTE and 5G. User device 60 establishes communication through network interface 619.

User device 60 is communicatively coupled to a display device via a graphics/video interface 616 and system bus 613. In some instances, the display device may be an integrated display. A graphical processing unit (GPU) 626 may be used in addition to improve graphical and other types of processing. User device 60 also includes an input peripheral interface 617 and an output peripheral interface 618 that are communicatively coupled to the system bus 613. Input peripheral interface is communicatively coupled to one or more input devices, such as a keyboard, mouse or touchscreen, for interaction between the user device 60 and a user. Output peripheral interface 618 is communicatively coupled to one or more output devices, such as a speaker. When not integrated, the communicative coupling may be wired, such as via a universal serial bus (USB) port, or wireless, such as over Bluetooth.

Figure 4B depicts an example external provider system 40. The components of the external provider system 40 may be the same as those described above for user device 60. In particular, the external provider system 40 may comprise a system bus 413, processor411, system memory 412, memory interface 414, storage media 415, graphics/video interface 416, GPU 426, input peripheral interface 417, output peripheral interface 418 and network interface 419. In certain embodiments, the external provider system 40 may take the form of an enterprise server.

### Cloud Computing Environment Architecture

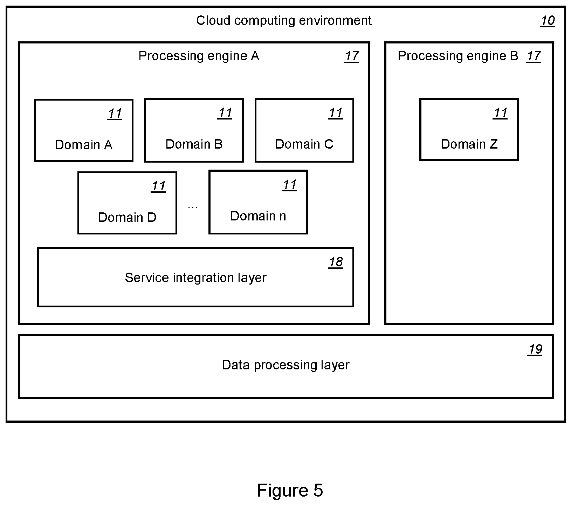

Figure 5 depicts an embodiment of cloud computing environment 10 architecture for implementing the present invention.

As shown in Figure 5, the cloud computing environment 10 contains one or more processing engines 17. Preferably, there are a plurality of processing engines 17. Figure 5 depicts two processing engines, processing engine A and processing engine B. Each processing engine 17 in the cloud computing environment 10 is a logical partition that is responsible for providing a particular processing function or subset of processing functions. Each processing engine 17 operates in an event-driven fashion. In other words, each processing engine 17 processes data as discrete events, and is able to support event-driven applications 135 of the type discussed with respect to Figure 3A and Figure 3B.

Each processing engine 17 has one or more domains 11. The domains 11 in a particular processing engine 17 provide security boundaries for protected data in the cloud computing environment 10. These domains may be separate and distinct within the cloud computing environment 10 allowing for the control of access to data based on different security levels. This separation of domains ensures that data is protected and only accessible by authorised users or applications. The domains 11 also modularise the particular processing function or subset of processing functions. Such modular architectures offer advantages such as scalability, reusability, and ease of maintenance by breaking the processing engine 17 down into smaller, interchangeable domains. Like the processing engines 17, each domain 11 processes data as discrete events and is therefore able to support event-driven applications 135 of the type discussed with respect to Figure 3A and Figure 3B. Moreover, each domain 11 may be implemented through serverless capabilities of the cloud computing environment 10. For example, when the cloud computing environment 10 is an AWS environment, such serverless capabilities may include DynamoDB, Amazon S3, AWS Lambda, AWS Step Functions, and Amazon API gateway. Optionally, each domain 17 may be composed of one or more sub domains.

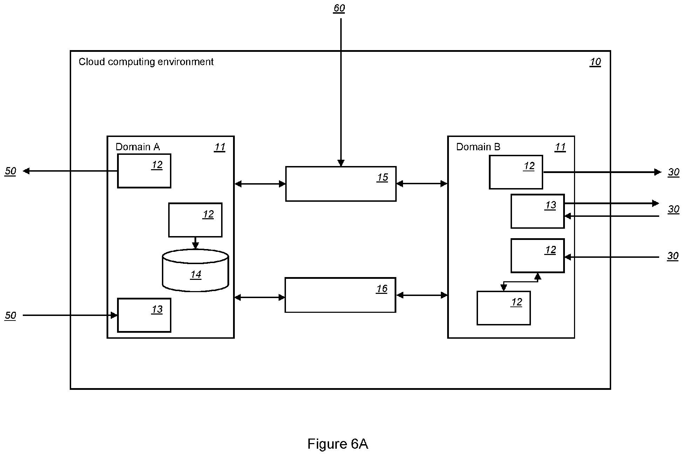

Referring briefly to Figure 6A, each domain 11 contains one or more processing modules 12. The processing modules 12 are event-driven and can be used within one or more event-driven applications 135. Put another way, the processing modules 12 are agnostic to the event-driven applications 135, and therefore may be combined with other components to easily create a new event-driven application 135. This flexibility enables the cloud computing environment 10 to adapt to changing requirements and support a wide range of event-driven applications 135. When the cloud computing environment 10 is an AWS environment, each of the processing modules 12 may be hosted on AWS ECS (Container) running on EC2 or AWS Farmgate.

In some examples, the domain 11 may include one or more data streams 13 that are configured to stream protected data. These data streams 13 are event-driven and may have incoming and outgoing connections to various components within the cloud computing environment 10 and outside of the cloud computing environment 10. For instance, within the cloud computing environment 10, the data streams 13 may be used to communicate data to and/or from one or more processing modules 12, one or more domains 11, one or more processing engines 17, one or more databases 14, and the like. Outside of the cloud computing environment 10, the data streams 13 may be used to communicate with local server 20 and/or external provider systems 40. In an AWS environment, such data streams 13 may be provided by Amazon Kinesis, which is a particular type of scalable and durable real-time data streaming application, or another data streaming application.

Each domain 11 may also contain one or more domain databases 14. Domain databases 14 may be used for different reasons, such as to log event processing occurring within the domain 11. In some examples, a database 14 is configured to store protected data. The database 14 may be a NoSQL database, such as DynamoDB, which provides a flexible and scalable approach for storing and managing data. The use of a NoSQL database 14 ensures that the cloud computing environment 10 can efficiently handle large volumes of data and support a wide range of applications.

The one or more processing modules 12, data streams 13, and domain databases 14 work together to provide a scalable, secure, and efficient domain 11 for processing and managing protected data.

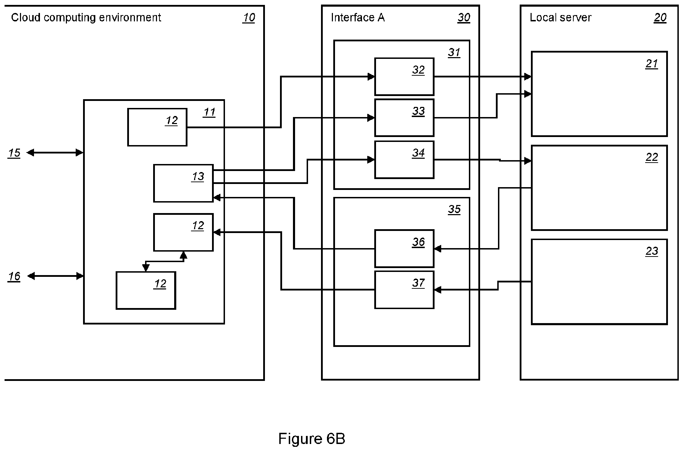

Referring back to Figure 5, processing engine 17 may contain a service integration layer 18. The service integration layer 18 is responsible for communications with local server 20. In particular, the service integration layer 18 uses APIs and/or event streaming patterns (as discussed with respect to Figure 6B) to enable standardisation and scaling for data between the processing engine 17 in the cloud computing environment 10 and the local server 20. Preferably, the service integration layer 18 includes an anti-corruption layer to facilitate integration between local server 20 (which does not support event-driven applications) to the cloud computing environment 10 (which does support event-driven applications) and vice versa.

In one particular consumer banking example, the cloud computing environment 10 is an AWS environment. In such an example, the cloud computing environment 10 includes at least two processing engines 17: processing engine A relating to financial product processing and processing engine B relating to application processing. Processing engine A 17 includes a plurality of domains 11, i.e. domains A, B, C, D... n. Such domains may include product management domains, primary domains, feature-driven domains and supplementary domains. Examples of primary domains include a payment processing domain, which manages real time account balances and supports user payment activity, and a transaction processing domain which relates to accounting and operational processing. Another example of a primary domain is an account operation domain, which controls how the execution of a process for an account is to be operated. Processing engine B includes one domain 11, i.e. domain Z. Such a domain may be an apply domain that is used so that a new or established user can apply to receive various resources (e.g. financial resources). The apply domain may also be used to on-board new users to the cloud computing environment 10.

Turning back to Figure 5, the cloud computing environment 10 also includes a data processing layer 19. The data processing layer 19 provides a common aggregation point for cloud computing environment 10 for providing data to various data platforms, for further analysis and/or manipulation.

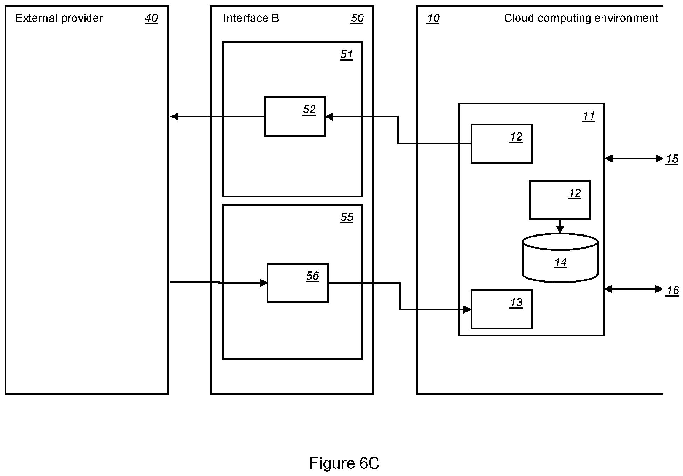

Figure 6A, Figure 6B and Figure 6C show example integration patterns of cloud computing environment 10 for implementing the invention. The integration patterns are a prescribed set of rules for connecting and coordinating different software components to and within the cloud computing environment 10. Such integration patterns particularly assist with data exchange, communication, and interoperability of various applications, including event-driven applications 135 and batch-driven applications. Figure 6A shows integration patterns within cloud computing environment 10 and from user device 60. Figure 6B depicts integration patterns between cloud computing environment 10 and local server 20, whilst Figure 6C shows integration patterns between cloud computing environment 10 and external provider system 40.

Referring first to Figure 6A, two integration patterns are shown. In particular, the cloud computing environment 10 is shown to include a first integration pattern, an inter-domain API (Application Programming Interface) 15. The inter-domain API 15 is configured to connect user devices 60 with one or more domains 11. This inter-domain API 15 allows user devices 60 to access and interact with the cloud computing environment 10, enabling users to, for example, call an application service API exposed by a domain 11 and/or access and manage their protected data securely and efficiently. In particular, this connection allows the user devices 60 to access and interact with the various processing modules 12, data streams 13, and other components within the domains 11.

In some examples, the inter-domain API 15 may provide a secure and efficient communication channel between the user devices 60 and the cloud computing environment 10. This secure communication channel may be established using various security protocols, including HTTPS, and encryption techniques to ensure the confidentiality, integrity, and availability of the data being transmitted between the user devices 60 and the cloud computing environment 10. The inter-domain API 15 may also provide various functionalities and services to the user devices 60, such as authentication, authorisation, data retrieval, data manipulation, and other application-specific operations. By providing these functionalities and services, the inter-domain API 15 enables the user devices 60 to seamlessly interact with the cloud computing environment 10 and perform various tasks and operations within the hosted applications 135.

A second integration pattern, inter-domain message bridge 16, is also shown in Figure 6A. The inter-domain message bridge 16 is positioned between two (or more) domains, and allows events in one domain to be pushed or pulled to another domain. This inter-domain message bridge 16 enables efficient communication and data transfer between domains, ensuring that data is processed and managed securely and efficiently within the cloud computing environment 10. This is particularly advantageous in a cloud computing environment 10 that comprises a plurality of domains 11 with different security boundaries and data processing requirements.

The inter-domain message bridge 16 is designed to support event-driven communication between domains 11, which is a key aspect of the asynchronous event-driven applications 135 hosted within the cloud computing environment 10. By enabling events in one domain 11 to be pushed or pulled (or "published") to another domain 11 as needed, the inter-domain message bridge 16 ensures that the processing modules 12 within the domains 11 can efficiently handle and process the protected data in an event-driven manner. The inter-domain message bridge 16 may be configured to support different event data formats, including NoSQL and JSON, to ensure compatibility with the various processing modules 12 and applications 135 within the cloud computing environment 10.

Reference is now made to Figure 6B, which depicts integration patterns between cloud computing environment 10 and local server 20. Figure 6B provides a more detailed view of the first interface module (interface module A) 30, which includes a first conversion module 31 and a second conversion module 35.

The first conversion module 31 is configured to handle outgoing data from the cloud computing environment 10 to the local server 20, and includes three integration patterns: outbound to local server API 32, fire and forget API 33, and a file batcher 34. The outbound to local server API 32 pattern is used where the local server 20 needs to consume real-time data from the cloud computing environment 10. Fire and forget API 33 is used where some of the events within the cloud computing environment 10 need to be published to the local server 20. File batcher 34 is used to collect events and consolidate the events into a scheduled batch file to provide to the local server 20.

The second conversion module 35 is configured to handle incoming data from the local server 20 to the cloud computing environment 10 and comprises two integration patterns: file debatcher 36 and inbound from local server API 37. File debatcher 36 is used to pass data from the local server, which is typically in the form of a batch file, to the cloud computing environment 10, which is event-driven. The inbound from local server API 37 is used where data is to be passed in real-time from the local server 20 to the cloud computing environment 10.

It is noted that, as shown in Figure 6B, local server 20 may comprise a plurality of partitions, such as a first partition 21, a second partition 22, and a third partition 23. These servers may be responsible for different tasks or functions related to the processing of protected data in synchronous batch-driven applications. Although three partitions are shown in Figure 6B, any number of partitions, including a single partition, may be present at local server 20.

Reference is now made to Figure 6C which shows integration patterns between cloud computing environment 10 and external provider system 40. In particular, Figure 6C provides further details of the second interface module (interface module B) 50, which includes a first conversion module 51 and a second conversion module 55. Each of the conversion modules in the second interface module 50 has its own integration pattern. In particular, the first conversion module 51 is responsible for sending protected data out to the external provider system 40 from the cloud computing environment 10, and therefore has an outbound to external provider API 52. The second conversion module 55 is responsible for receiving data from the external provider system 40 to the cloud computing environment 10, and therefore has an inbox to external provider API 56.

It should be appreciated that the architecture of cloud computing environment 10 of Figure 5 and the integration patterns of Figure 6A, Figure 6B and Figure 6C are merely exemplary. Other architectures and integration patterns may be used for implementing the invention.

### Account Operation Domain

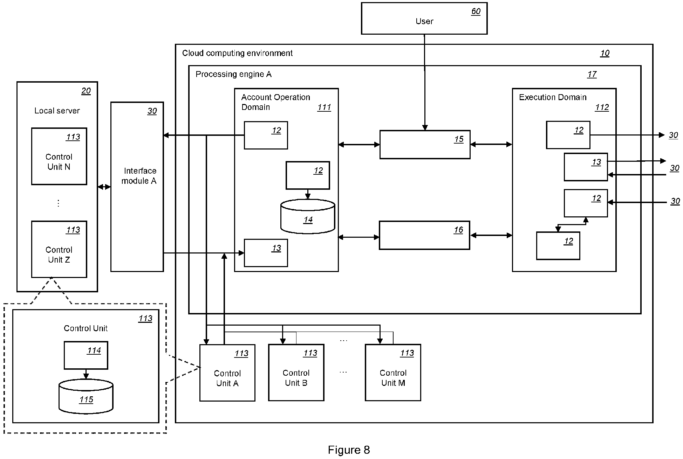

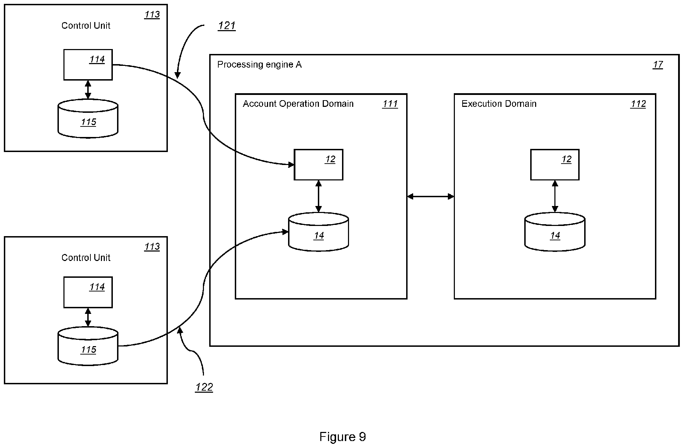

As discussed, data processing within the cloud computing environment 10 is based on the use of event-driven applications, where data, e.g., incoming requests, is processed as events. A class of such event-driven applications concerns the operational control of the execution of processes pertaining to third-party accounts. The account operation domain 111 (as shown in Figures 8 and 9) and associated methods facilitate the provision of at least a portion of such applications and, in the process, address existing challenges concerning the operational control of the execution of processes pertaining to third-party accounts.

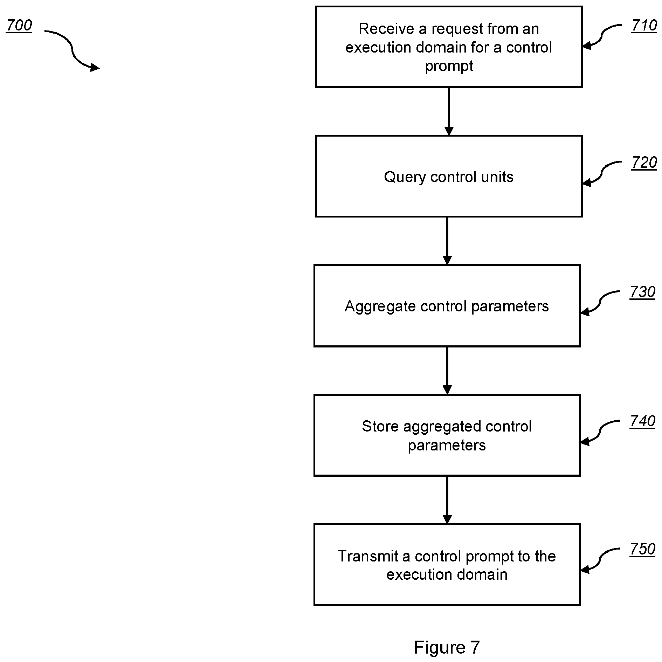

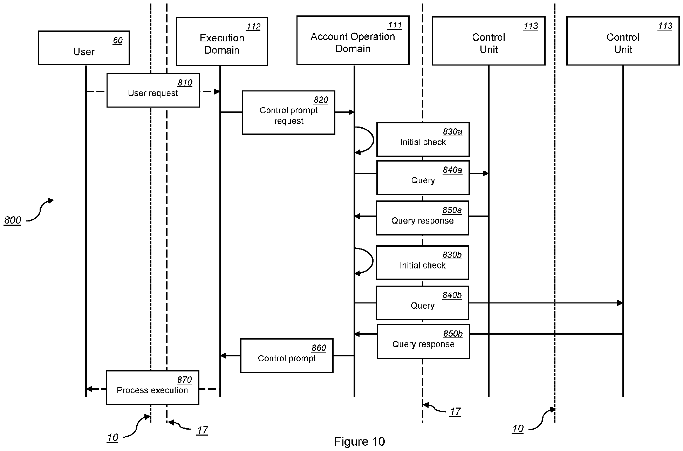

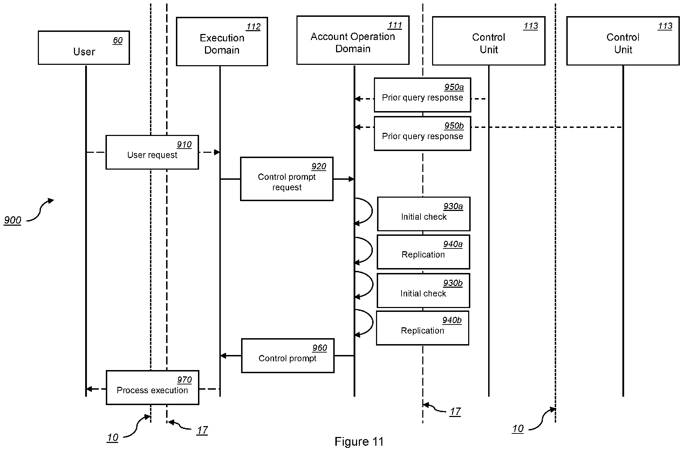

Figure 7 shows a flow diagram of a method 700 for controlling operation of an execution of a process in a cloud computing environment 10 according to an embodiment of the invention. The steps of the method 700 will be described with reference to the cloud computing environment 10 of Figures 8 and 9, which show specific embodiments of the cloud computing environment 10 in which the domains 11 are represented by an account operation domain 111 and an execution domain 112. Further reference is made to Figures 10 and 11, which show protocol sequence diagrams of methods 800, 900 for controlling operation of an execution of a process in a cloud computing environment 10 according to embodiments of the invention.

The method 700 may be performed by the account operation domain 111, as seen in Figures 8 and 9. The account operation domain 111 is a domain within the cloud computing environment 10 that is responsible for determining how to control operation of the execution of a process pertaining to a third-party account. A third-party account may represent an end user account for accessing services from a party responsible for maintaining the cloud computing environment 10.

In step 710, the account operation domain 111 receives a request from the execution domain 112 for a control prompt. The control prompt is required by the execution domain 112 for processing to control operation of execution of a process pertaining to the third-party account. As can be seen in Figure 8, like the account operation domain 111, the execution domain 112 is also part of the processing engine 17 and, therefore, part of the cloud computing environment 10. The execution domain 112 is a domain within the cloud computing environment 10 that is responsible for executing processes pertaining to third-party accounts and for making the final decision on how and whether a given process should be executed. As discussed with reference to Figure 5, the execution domain 112 is one of a number of domains within the processing engine 17 and may be one of a number of execution domains 112, each of which may be responsible for executing a subset of processes pertaining to third-party accounts. The third-party account may belong, for example, to a user accessing the user device 60. The step 710 may be triggered by a communication from the user device 60 to the execution domain 112 via inter-domain API 15, as described with reference to Figure 6A, and as shown in steps 810 and 910 of Figures 10 and 11, respectively. For example, this communication may be a request from a third-party account, via an end user application on the user device 60, to perform a process related to the account and/or on the application that requires consideration from a party responsible for maintaining the cloud computing environment 10. Upon this trigger, the execution domain 112 may transmit the request for a control prompt to the account operation domain 111, which receives the request, as shown in steps 820 and 920 of Figures 10 and 11, respectively. This request may be transmitted from the execution domain 112 to the account operation domain 111 via inter-domain API 15 and/or inter-domain message bridge 16, as described with reference to Figure 6A. The request received by the account operation domain 111 may include data associated with the process and the third-party account.

In step 720, the account operation domain 111 queries one or more control units 113 for one or more control parameters related to the process. The control units 113, as seen in Figures 8 and 9, are components of the broader digital environment that have a controlling interest in how and whether processes pertaining to third-party accounts are executed. As seen in Figure 8, the control units 113 may be part of the cloud computing environment 10 (but outside of the processing engine 17) and/or may be based on the local server 20. Each of the control units 113 may have a distinct set of responsibilities, i.e., may be concerned with controlling processes for different reasons. In some examples, a control unit 113 on the cloud computing environment 10 having a particular set of responsibilities may be replicated on the local server 20. In other examples, a first set of control units 113 may be part of the cloud computing environment 10, as represented by control units A to M in Figure 8, and a second set of control units 113 may be part of the local sever 20, as represented by control units N to Z in Figure 8. The inset of Figure 8 shows an example of a control unit 113 in further detail. The control unit 113 contains a processing module 114 and a database 115. The control unit may contain other components not shown. Both the processing module 114 and the database 115 may be configured for communicating with components of the cloud computing environment 10.

During step 720, the control units 113 are queried for control parameters. In the present context, control parameters describe a form of data that is used by the execution domain 112 for controlling, e.g., limiting, the execution of a process pertaining to a third-party account. In some examples, a control unit 113 may return a single control parameter per query. In other examples, a control unit 113 may return a plurality of control parameters. In an example where the method of control is based on a veto model, a control parameter returned by a given control unit 113 need only include one of two values, e.g., a 1 or 0, a YES or NO, a high or low, etc. In some examples, a control unit 113 not returning any control parameters can represent an approval of a process, e.g., a 1, a YES, a high etc.

The function of the account operation domain 111 querying one or more control units 113 will be described in further detail with reference to Figures 9, 10 and 11. For the sake of simplicity, some components of the broader digital environment shown in Figure 8 are excluded from Figure 9. For a given request received by the account operation domain 111 from the execution domain 112, one or more control units 113 are queried by the account operation domain 111 for control parameters. For control units 113 located within the cloud computing environment 10, this querying, i.e., communication, may be established by a direct communication link between the account operation domain 111 and the one or more control units 113 or may be via a suitable interface module (not shown). For control units 113 located on the local server 20, this querying, i.e., communication, may be established by interface module 30, as described with reference to Figures 2 and 6B. Data relating to which control units 113 need to be queried may be included in the request and/or may be obtained by the account operation domain 111 from other components within the broader digital environment. In examples where more than one control unit 113 is queried, the plurality of control units 113 that are queried may be queried by the account operation domain 111 in series or parallel. The choice of the account operation domain 111 on whether the querying is done in series or parallel may be based on available computing resources and/or latency requirements and/or response urgency.

For each control unit 113 being queried, a unit-specific communication pattern may be established between the account operation domain 111 and the given control unit 113. A first method 800 encompassing a first unit-specific communication pattern is shown in the protocol sequence diagram of Figure 10, while a second method 900 encompassing a second unit-specific communication pattern is shown in the protocol sequence diagram of Figure 11, each of which will be discussed in turn, below.

Referring first to Figure 10, the unit-specific communication pattern encompassed by the method 800 relates to querying a processing module 114 of a control unit 113 for a real-time control parameter related to the process. Such a unit-specific communication pattern may be used in instances where a given control unit 113 has the capacity and availability to be queried in real-time which, although being computationally expensive and coming at the expense of higher latency, has the benefit of obtaining an accurate, i.e., up to date, control parameter. In the example shown in Figure 10, there are two control units 113 being queried (one in the cloud computing environment 10 and one outside, e.g., on local server 20) and they are queried in series. However, the unit-specific communication pattern encompassed by the method 800 may be used to query any number of control units 113 in series or parallel.

As already discussed, the step 820 of the account operation domain 111 receiving a request from the execution domain 112 for a control prompt may be triggered by an initial communication from user device 60 to the execution domain 112, as shown in optional step 810. This communication may be a request from a third-party account belonging to a user of the user device 60, via an end user application, to perform a process for the account and/or on the application that requires the consideration of a party responsible for maintaining the cloud computing environment 10.

In steps 830a and 830b, as a precursor to the account operation domain 111 establishing a communication link with, and querying, the control units 113, the account operation domain 111 performs an initial check to determine whether, for the given request, the given control units 113 should be queried by the account operation domain 111. As discussed, data relating to which control units 113 should be queried by the account operation domain 111 for control parameters related to a given process may be included as part of the request received from the execution domain 112. If it is determined that a given control unit 113 should be queried, e.g., because it is concerned with controlling the given process, then a communication link between the account operation domain 111 and the given control unit 113 will be established, as represented in part, by steps 840a and 840b. In the example shown in Figure 10, the account operation domain 111 determines that both control units 113 should be queried.

The steps 840a and 840b represent querying the respective processing modules 114 of the control units 113 for real-time control parameters related to the process. This querying may take the form of a direct API service call to the control unit 113. The respective processing modules 114 of the control units 113 process data transmitted with the query to determine one or more control parameters in response. The data transmitted with the query may include data associated with the process, the third-party account and other variables obtained by the account operation domain 111 and/or the execution domain 112 to allow the control units 113 to determine appropriate control parameters.

In steps 850a and 850b, the control units 113 respond to the query from the account operation domain 111 by transmitting one or more control parameters from the respective processing modules 114 of the control units 113, as represented by communication path 121 in Figure 9. As discussed, in some examples, each of the control units 113 may return a plurality of control parameters. In other examples, each of the control units 113 may return a single control parameter.

Referring now to Figure 11, the unit-specific communication pattern encompassed by the method 900 relates to replicating from a database 115 of a control unit 113 a previously generated and stored control parameter related to the process. Such a unit-specific communication pattern may be used in instances where a given control unit 113 does not have the capacity and availability to be queried in real-time, or in instances where a given control unit 113 does have the capacity and availability to be queried in real-time, but the method requires high-availability of data and low latency. In the example shown in Figure 11, there are two control units 113 being queried (one in the cloud computing environment 10 and one outside, e.g., on local server 20) and they are queried in series. However, the unit-specific communication pattern encompassed by method 900 may be used to query any number of control units 113 in series or parallel.

The steps 910, 920, 930a, and 930b in Figure 11 correspond to steps 810, 820, 830a, and 830b in Figure 10, respectively.

Steps 950a and 950b represent a process of the control units 113 responding to a prior query from the account operation domain 111 by transmitting one or more control parameters from the respective processing modules 114 of the control units 113 to the account operation domain 111. This prior query may concern the same third-party account and may relate to the same or a similar process to the process related to the present request. During steps 950a and 950b, the one or more control parameters that are received by the account operation domain 111 are stored in the respective databases 115 of the control units 113. During steps 950a and 950b, these control parameters may also be stored in a database 14 of the account operation domain 111. The one or more control parameters stored in the database 14 of the account operation domain 111 for a given request may thus represent a replication of the one or more control parameters stored in the respective databases 115 of the control units 113 for the given request.

As is the case with method 800 of Figure 10, method 900 of Figure 11 includes a step of the account operation domain 111 receiving a request from the execution domain 112 for a control prompt (step 920), and the account operation domain 111 performing an initial check to determine whether, for the given request, the given control units 113 should be queried by the account operation domain 111 (steps 930a, 930b). However, as the unit-specific communication pattern encompassed by method 900 does not rely on real-time calls to the processing modules 114 of the respective control units 113, steps 940a and 940b involve the account operation domain 111 determining one or more control parameters from the control units 113 based on prior stored data. This determination may include the account operation domain 111 pulling, i.e., replicating, from the respective databases 115 of the control units 113 a previously generated and stored control parameter related to the request, as represented by communication path 122 in Figure 9 and which may relate to the control parameters transmitted during steps 950a and 950b. In other examples, the determination may include the account operation domain 111 referring to its own database 14 to identify the control parameters transmitted during steps 950a and 950b. In each case, this determination constitutes a replication of previously generated and stored control parameter related to the request from the respective databases 115 of the control units 113. Although steps 950a and 950b are shown as preceding steps 910 and 920 in Figure 11, they may be performed at any time prior to steps 940a and 940b, respectively.

In some examples, the method 700 may include employing both unit-specific communication patterns encompassed by methods 800 and 900 during step 720.

Referring back to Figure 7, in step 730, the account operation domain 111 aggregates the control parameters that are generated in response to the querying of step 720. The aggregating step 730 may involve classifying and/or condensing the control parameters received by the account operation domain 111. As discussed, in an example, the control parameters, are one of a veto against, or an approval of, the process being executed. The control parameters may be represented in a binary form, e.g., with an approval and a veto represented as a 1 and a 0, a YES and a NO, a high and a low, respectively, and classified as such. An embodiment of the method is performed on the premise of a veto model, in which only one veto, 0, NO, or low is required in the aggregated control parameters to prevent the execution of the process.

In step 740, the account operation domain 111 stores the one or more aggregated control parameters. The aggregated control parameters are stored within the account operation domain 111 along with data associated with the process, and data associated with the third-party account. In an example, the control parameters and the data associated with the request are stored in a database 14 of the account operation domain 111. As discussed, storing this data can be valuable for audit purposes.

In step 750, the account operation domain 111 transmits a control prompt to the execution domain 112. This control prompt is for the execution domain 112 to process to control operation of the execution of the process pertaining to the third-party account according to the aggregated control parameters. This transmission is represented by steps 860 and 960 in Figures 10 and 11, respectively. This transmission may be via inter-domain API 15 and/or inter-domain message bridge 16, as described with reference to Figure 6A. In an example, the control prompt may comprise a set of constraints for the execution domain 112 to control operation of the execution of the process. In other examples, the control prompt may comprise a single value representing an approval/permission of the process to be executed or a prevention of the process to be executed. In other examples, the control prompt may be represented by the set of aggregated control parameters.

Referring to steps 870 and 970 of Figures 10 and 11, respectively, the methods 800 and 900 may optionally include a further step of the execution domain 112 communicating with the third-party account via the user device 60 to control operation of execution of the process on an application and/or account associated with the user and/or the user device 60.

The account operation domain 111 thus facilitates an end-to-end cloud-based framework for controlling operation of an execution of a process in a cloud computing environment.

### General

The invention can take the form of an entirely hardware embodiment, an entirely software embodiment or an embodiment containing both hardware and software elements. In a preferred embodiment, the invention is implemented in software.

Furthermore, the invention can take the form of a computer program embodied as a computer-readable medium having computer executable code for use by or in connection with a computer. For the purposes of this description, a computer readable medium can be any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following list provides embodiments of the invention and forms part of the description. These embodiments can be combined in any compatible combination beyond those expressly stated. The embodiments can also be combined with any compatible features described herein:
1. A computer-implemented method for controlling operation of an execution of a process in a cloud computing environment, the process pertaining to a third-party account, the cloud computing environment comprising a processing engine having an account operation domain, wherein the method is performed by the account operation domain and comprises:
   a) receiving a request from an execution domain within the processing engine for a control prompt, wherein the control prompt is for processing by the execution domain to control operation of the execution of the process;
   b) querying one or more control units for one or more control parameters related to the process, wherein the one or more control units are located outside of the processing engine and are associated with the process;
   c) aggregating the one or more control parameters from the one or more control units;
   d) storing the one or more aggregated control parameters, data associated with the process, and data associated with the third-party account within the account operation domain; and
   e) transmitting a control prompt to the execution domain for the execution domain to process to control operation of the execution of the process according to the aggregated control parameters.
2. The method of embodiment 1, wherein step b) comprises querying a plurality of control units of the one or more control units in series.
3. The method of embodiment 2, wherein the series order in which to query the plurality of control units is optimised based on historical data relating to the plurality of control units.
4. The method of embodiment 3, wherein the historical data comprises estimated response times for each of the of the plurality of control units.
5. The method of any one of embodiments 2 to 4, wherein querying the plurality of control units in series terminates when a control parameter obtained in response from a given one of the plurality of control units comprises a veto against the process.
6. The method of embodiment 1, wherein step b) comprises querying a plurality of control units of the one or more control units in parallel.
7. The method of any preceding embodiment, wherein the request comprises an indication of the one or more control units to be queried for control parameters related to the process.
8. The method of any preceding embodiment, wherein step b) comprises determining for each of the one or more control units whether the given control unit should be queried for a control parameter related to the process.
9. The method of embodiment 8, wherein if it is determined that the given control unit should be queried for a control parameter related to the process, obtaining the control parameter from the given control unit.
10. The method of any preceding embodiment, wherein step b) comprises transmitting data associated with the third-party account and data associated with the process to the one or more control units for processing to obtain the one or more control parameters from the one or more control units in response.
11. The method of any preceding embodiment, wherein step b) comprises querying a processing module of a control unit of the one or more control units for one or more real-time control parameters related to the process.
12. The method of any preceding embodiment, wherein step b) comprises replicating from a database of a control unit of the one or more control units one or more previously generated and stored control parameters related to the process.
13. The method of any preceding embodiment, wherein the one or more control parameters comprise constraints for controlling operation of the execution of the process.
14. The method of any preceding embodiment, wherein step c) comprises determining whether the one or more aggregated control parameters comprise one or more vetoes against the process.
15. The method of any preceding embodiment, wherein the control prompt comprises an approval for or a veto against the execution domain executing the process.
16. The method of any preceding embodiment, wherein step c) comprises binary classifying the one or more aggregated control parameters before applying a Boolean AND function on the classified aggregated control parameters.
17. The method of embodiment 16, wherein if an output of the Boolean AND function is low, the control prompt comprises a veto against the execution domain executing the process, and if an output of the Boolean AND function is high, the control prompt comprises an approval for the execution domain to execute the process.
18. The method of any preceding embodiment, wherein the execution domain is responsible for executing the process.
19. The method of any preceding embodiment, wherein step d) comprises storing the one or more aggregated control parameters, data associated with the process, and data associated with the third-party account within a database of the account operation domain.
20. The method of any preceding embodiment, wherein the process defines at least a portion of an event-driven application hosted on the cloud computing environment.
21. The method of any preceding embodiment, wherein the request is triggered by a communication from an end user application on an end user device, wherein the end user application interfaces a user with the third-party account.
22. The method of any preceding embodiment, wherein the processing engine and the control units are maintained by a first party, and wherein the process pertaining to the third-party account relates to accessing services provided by the first party.
23. The method of embodiment 22, wherein the cloud computing environment is hosted by a second party.
24. The method of any preceding embodiment, wherein the one or more control units comprises one or more control units based on the cloud computing environment and/or one or more control units based on a local server, wherein the local server is local to a first party that maintains the processing engine and the control units.
25. An account operation domain within a processing engine of a cloud computing environment configured to perform the method of any one of embodiments 1 to 24, comprising:
   a) one or more processing modules for communicating with, and processing data from, the execution domain and the one or more control units; and
   b) one or more databases for storing the one or more aggregated control parameters, data associated with the process, and data associated with the third-party account.
26. A cloud computing environment comprising the account operation domain of embodiment 25.

## Claims

1. A computer-implemented method for controlling operation of an execution of a process in a cloud computing environment, the process pertaining to a third-party account, the cloud computing environment comprising a processing engine having an account operation domain, wherein the method is performed by the account operation domain and comprises:
a) receiving a request from an execution domain within the processing engine for a control prompt, wherein the control prompt is for processing by the execution domain to control operation of the execution of the process;
b) querying one or more control units for one or more control parameters related to the process, wherein the one or more control units are located outside of the processing engine and are associated with the process;
c) aggregating the one or more control parameters from the one or more control units;
d) storing the one or more aggregated control parameters, data associated with the process, and data associated with the third-party account within the account operation domain; and
e) transmitting a control prompt to the execution domain for the execution domain to process to control operation of the execution of the process according to the aggregated control parameters.

2. The method of claim 1, wherein step b) comprises querying a plurality of control units of the one or more control units in series.

3. The method of claim 2, wherein the series order in which to query the plurality of control units is optimised based on historical data relating to the plurality of control units.

4. The method of claim 3, wherein the historical data comprises estimated response times for each of the of the plurality of control units.

5. The method of any one of claims 2 to 4, wherein querying the plurality of control units in series terminates when a control parameter obtained in response from a given one of the plurality of control units comprises a veto against the process.

6. The method of claim 1, wherein step b) comprises querying a plurality of control units of the one or more control units in parallel.

7. The method of any preceding claim, wherein step b) comprises querying a processing module of a control unit of the one or more control units for one or more real-time control parameters related to the process.

8. The method of any preceding claim, wherein step b) comprises replicating from a database of a control unit of the one or more control units one or more previously generated and stored control parameters related to the process.

9. The method of any preceding claim, wherein step c) comprises determining whether the one or more aggregated control parameters comprise one or more vetoes against the process.

10. The method of any preceding claim, wherein the control prompt comprises an approval for or a veto against the execution domain executing the process.

11. The method of any preceding claim, wherein step c) comprises binary classifying the one or more aggregated control parameters before applying a Boolean AND function on the classified aggregated control parameters.

12. The method of claim 11, wherein if an output of the Boolean AND function is low, the control prompt comprises a veto against the execution domain executing the process, and if an output of the Boolean AND function is high, the control prompt comprises an approval for the execution domain to execute the process.

13. The method of any preceding claim, wherein step d) comprises storing the one or more aggregated control parameters, data associated with the process, and data associated with the third-party account within a database of the account operation domain.

14. An account operation domain within a processing engine of a cloud computing environment configured to perform the method of any one of claims 1 to 13, comprising:
a) one or more processing modules for communicating with, and processing data from, the execution domain and the one or more control units; and
b) one or more databases for storing the one or more aggregated control parameters, data associated with the process, and data associated with the third-party account.

15. A cloud computing environment comprising the account operation domain of claim 14.

## Amended claims

### Amended claims in accordance with Rule 137(2) EPC.

1. A computer-implemented method for controlling operation of an execution of a process in a cloud computing environment (10), the process pertaining to a third-party end user account, the cloud computing environment comprising a processing engine (17) having an account operation domain (111), wherein the method is performed by the account operation domain and comprises:
a) receiving a request from an execution domain (112) within the processing engine for a control prompt, wherein the control prompt is for processing by the execution domain to control operation of the execution of the process;
b) querying one or more control units (113) for one or more control parameters related to the process, wherein the one or more control units each comprise a processing module (114) and a database (115), are located outside of the processing engine, and are associated with the process;
c) aggregating the one or more control parameters from the one or more control units;
d) storing the one or more aggregated control parameters, data associated with the process, and data associated with the third-party account within the account operation domain; and
e) transmitting a control prompt to the execution domain for the execution domain to process to control operation of the execution of the process according to the aggregated control parameters,
wherein the processing engine and the control units are maintained by a first party, and
wherein the process pertaining to the third-party end user account relates to accessing services provided by the first party.

2. The method of claim 1, wherein step b) comprises querying a plurality of control units of the one or more control units in series.

3. The method of claim 2, wherein the series order in which to query the plurality of control units is optimised based on historical data relating to the plurality of control units.

4. The method of claim 3, wherein the historical data comprises estimated response times for each of the of the plurality of control units.

5. The method of any one of claims 2 to 4, wherein querying the plurality of control units in series terminates when a control parameter obtained in response from a given one of the plurality of control units comprises a veto against the process.

6. The method of claim 1, wherein step b) comprises querying a plurality of control units of the one or more control units in parallel.

7. The method of any preceding claim, wherein step b) comprises querying a respective processing module of a control unit of the one or more control units for one or more real-time control parameters related to the process.

8. The method of any preceding claim, wherein step b) comprises replicating from a respective database of a control unit of the one or more control units one or more previously generated and stored control parameters related to the process.

9. The method of any preceding claim, wherein step c) comprises determining whether the one or more aggregated control parameters comprise one or more vetoes against the process.

10. The method of any preceding claim, wherein the control prompt comprises an approval for or a veto against the execution domain executing the process.

11. The method of any preceding claim, wherein step c) comprises binary classifying the one or more aggregated control parameters before applying a Boolean AND function on the classified aggregated control parameters.

12. The method of claim 11, wherein if an output of the Boolean AND function is low, the control prompt comprises a veto against the execution domain executing the process, and if an output of the Boolean AND function is high, the control prompt comprises an approval for the execution domain to execute the process.

13. The method of any preceding claim, wherein step d) comprises storing the one or more aggregated control parameters, data associated with the process, and data associated with the third-party account within a database of the account operation domain.

14. A cloud computing environment (10) comprising:
one or more control units (113) each comprising a processing module (114) and a database (115), and
a processing engine (17) comprising an execution domain (112) and an account operation domain (111),
wherein the account operation domain comprises:
a) one or more processing modules (12, 13) for communicating with, and processing data from, the execution domain and the one or more control units; and
b) one or more databases (14) for storing the one or more aggregated control parameters, data associated with the process, and data associated with the third-party account,
and wherein the account operation domain is configured to perform the method of any one of claims 1 to 13.
